# EUROPEAN PATENT SPECIFICATION

(11) **EP 2 415 643 B1**
(45) Date of publication and mention of the grant of the patent: **28.11.2012**
(21) Application number: 11176375.1
(22) Date of filing: 03.08.2011
(51) Int. Cl.: B60R 19/34

(54) **Front vehicle body structure**
Fahrzeugvorderwagenaufbau
Structure de la partie avant d'un véhicule

(30) Priority: 05.08.2010 JP 2010176555; 05.08.2010 JP 2010176569
(43) Date of publication of application: 08.02.2012
(73) Proprietor: Honda Motor Co., Ltd., Tokyo 107-8556 (JP)
(72) Inventor: Ichikawa, Tomoaki, Saitama, 351-0193 (JP); Yasuhara, Shigeto, Saitama, 351-0193 (JP); Kameyama, Shigetaka, Saitama, 351-0193 (JP); Kihara, Makoto, Saitama, 351-0193 (JP); Takeda, Tomoya, Saitama, 351-0193 (JP)
(74) Representative: Herzog, Markus

(56) References cited:
- WO-A1-2010/038598
- JP-A- 2009 107 445

## Description

The present invention relates to a front vehicle body structure according to the preamble part of claim 1 known from JP 2009-107445A the front vehicle body structure including a front side frame extending in a front-rear direction of the vehicle body, a bumper beam extension provided at the front end of the front side frame and fixedly connected to a bumper beam, and an upper member disposed laterally outwardly of the front side frame and curved upwardly toward the rear of the vehicle body.

Japanese Patent Application Laid-Open Publication No. 2009-107445 (hereinafter referred to as "patent literature 1"), for example, discloses a front vehicle body structure which includes a collapsing member (i.e., bumper beam extension) that is provided on a front portion of the vehicle body and that, at the time of a frontal collision of the vehicle, warps or buckles due to a collision impact load acting thereon from a bumper beam. The collapsing member (bumper beam extension) is arcuately shaped such that its central axis curves outwardly in the width direction of the vehicle. Thus, even when an external obstacle or object has collided with the vehicle body with some inclination angle to the bumper beams (i.e., at the time of an oblique collision), the front vehicle body structure disclosed in patent literature 1 can appropriately absorb collision impact energy.

However, the front vehicle body structure disclosed in patent literature 1 is disadvantageous in that, when a frontal collision load has acted on the front vehicle body structure from a head-on position with no inclination angle to the bumper beam, the collapsing member (bumper beam extension), arcuately shaped such that its central axis curves outwardly in the vehicle width direction would undesirably bend because the collapsing member (bumper beam extension) collapses in a bellows-like fashion, due to a collision load acting in its axial direction, to absorb collision energy, and thus, an amount of collision energy absorption by the collapsing member would undesirably decrease. Further, because the collapsing member has its width located within the width range of the front side frame, the amount of energy absorption by the collapsing member tends to be insufficient with respect to an oblique collision with some inclination angle to the bumper beam.

Further, Japanese Patent Application Laid-Open Publication No. 2009-137359 (hereinafter referred to as "patent literature 2"), for example, discloses a front vehicle body structure in which a front side frame extends in a front-rear direction of the vehicle body, an upper member is disposed laterally outwardly of the front side frame, inner and outer impact absorbing sections (inner and outer bumper beam extensions) are provided at respective front end portions of the front side frame and upper member, and a bumper beam is provided on front end portions of the inner and outer impact absorbing sections. The front vehicle body structure disclosed in patent literature 2 can prevent the inner and outer impact absorbing sections from deforming toward the center of the vehicle body due to a collision impact load applied from an external object obliquely in front of the vehicle body. Because the inner and outer impact absorbing sections (inner and outer bumper beam extensions) are provided at the front ends of the front side frame and upper member, respectively, and the inner and outer impact absorbing sections are each formed in a straight shape, bellows-like deformation due to buckling of the inner and outer impact absorbing sections is difficult to occur in response to an oblique collision load with some inclination angle, and a collapsing style or mode of the inner and outer impact absorbing sections cannot be stabilized.

Further, in the front vehicle body structure disclosed in patent literature 2, upper and lower extension portions extend from a front-end inner side of the upper member and are fixedly joined to front-end upper and lower walls of the front side frame. However, because only the upper and lower extension portions are fixedly joined to the front-end upper and lower walls of the front side frame, a joint between the front ends of the front side frame and upper member is insufficient. Thus, frontal and oblique collision loads from the bumper beam are difficult to be transmitted via the inner impact absorbing section to the upper member and via the outer impact absorbing section to the front side frame. Namely, the collision loads are difficult to be appropriately dispersed to the front side frame and upper member.

WO2010038598 A shows a front vehicle body structure comprising a front side frame extending in a front-rear direction of a vehicle body, a bumper beam extension provided at a front end of the front side frame, and a bumper beam provided at a front end of the bumper beam extension, wherein the bumper beam extension is closed at a front end thereof with a cap member, and the cap member has a rearward flange, wherein the rearward flange is welded to the upper surface and lower surface of the bumper beam extension.

It is an object of the present invention to provide an improved front vehicle body structure which can be collapsed stably.

In order to accomplish the above-mentioned objects, the present invention provides a front vehicle body structure according to claim 1 comprising a front side frame extending in a front-rear direction of a vehicle body, a bumper beam extension provided at the front end of the front side frame, and a bumper beam provided at the front end of the bumper beam extension, characterized in that the bumper beam extension has a polygonal cross-sectional shape and has an arcuately curved shape as viewed in plan such that a front end portion thereof arcuately curves laterally outwardly (as it extends) toward the front of the vehicle body, wherein the bumper beam extension provided at the front end of the front side frame is closed at its front end with a cap member, and the cap member has a rearward flange welded to one of the upper surface and lower surface of the bumper beam extension.

The front vehicle body structure of the present invention is characterized in that the bumper beam extension has a polygonal cross-sectional shape and has a curved shape as viewed in plan such that it arcuately curves laterally outwardly in a vehicle body as it extends toward the front of the vehicle body, and in that the bumper beam extension is butt-welded to the front surface of the connection plate with the rear ends of ridge lines of the polygonal cross-sectional body fixed to the front surface of the connection plate. With such characteristic arrangements, the present invention can reduce a transmission loss of a load transmitted from the bumper beam to the front side frame and allows the bumper beam extension to start collapsing in a bellows-like fashion at an initial stage of an oblique collision and thereby efficiently absorb collision energy. Further, the bumper beam extension preferably has a 1-mm thickness, in which case it can be subjected to ordinary MIG welding, so that an improved productivity can be achieved.

The welded side of the bumper beam extension is difficult to collapse because it has a greater strength and rigidity than the non-welded side. Thus, as the bumper beam pivots upward or downward due to a frontal collision, the non-welded side of the bumper beam extension is bent first, creating a starting point of a collapsing action. As a consequence, the bumper beam extension can be collapsed stably in a bellows-like fashion.

Preferably, the front vehicle body structure of the present invention further comprises an upper member disposed laterally outwardly of the front side frame in side by side relation thereto and curved upwardly toward the rear of the vehicle body, and an outer bumper beam extension member having a central axis extending straight in the front-rear direction of the vehicle body and provided at the front end of the upper member, and the outer bumper beam extension member has a smaller length than the bumper beam extension provided at the front end of the front side frame.

In the front vehicle body structure of the present invention, the outwardly curved shape of the bumper beam extension (i.e., inner bumper beam extension), provided at the front end of the front side frame, can settle a collapsing mode and permits stable control of collision performance of the front vehicle body structure. Namely, only the bumper beam extension, elongated in the front-rear direction and thus tending to collapse in an unstable manner at the time of an oblique collision of the vehicle, is constructed as a curved structure to stabilize the collapsing mode, so that the shorter, straight outer bumper beam extension member is caused to collapse following initial collapse of the bumper beam extension. In this way, the present invention can increase an amount of energy absorption at the time of an oblique collision of the vehicle. Further, because the outer bumper beam extension member supports the bumper beam at the time of a frontal collision of the vehicle with no substantial inclined angle, the bumper beam extension can be prevented from bending due to the collision.

Preferably, the front vehicle body structure of the present invention further comprises a connection plate connected between the rear end of the bumper beam extension and the front end of the front side frame, and the bumper beam extension is butt-welded to the front surface of the connection plate with rear ends of ridge lines of a polygonal cross-sectional body of the bumper beam extension fixed to the front surface of the connection plate.

Preferably, the bumper beam extension and the outer bumper beam extension member are interconnected via the connection plate. This arrangement can stabilize the collapsing mode even more reliably.

Preferably, the rearward flange of the cap member is connected at a rear portion thereof to the bumper beam extension via a connection bracket. This arrangement can reduce vibration of the bumper beam and minimize influences on the collapsing mode.

Preferably, the connection bracket has a bead provided thereon, near a fastening section thereof fastened to the bumper beam extension, for preventing deformation of the connection bracket, for example, during transportation of the connection bracket.

Preferably, in the front vehicle body structure of the present invention, the connection member interconnects respective front-end side walls of the front side frame and the upper member, and the connection member is constructed of two separate connection members: a frame-side connection member connected to the front-end side wall of the front side frame; and an upper-member-side connection member connected to the front-end side wall of the upper member.

Because the respective front-end side walls of the front side frame and the upper member are interconnected by the connection member, the present invention can increase the efficiency and strength of the joint between the front ends of the front side frame and the upper member. As a result, the present invention allows frontal and oblique collision loads from the bumper beam to be appropriately dispersed to the front side frame and upper member.

Further, because the connection member is constructed of the two separate connection members, it is possible to join the frame-side connection member to the front side frame and the upper-member-side connection member to the upper member in advance, then position the front side frame and upper member in place and then join together the frame-side connection member and the upper-member-side connection member. As a result, the connection member can be disposed in a small space where the frame-side connection member and the upper-member-side connection member are provided.

Preferably, in the front vehicle body structure of the present invention, the connection member has a substantially U sectional shape as viewed sideways or in a side elevation. Thus, the efficiency and strength of the joint between the front ends of the front side frame and the upper member can be even further increased by the upper and lower ridge lines of the U sectional shape. As a result, the present invention can increase a load dispersion efficiency.

Further, in the front vehicle body structure of the present invention, the frame-side connection member and the upper-member-side connection member are joined with each other at their respective central portions thereof. Thus, the present invention can efficiently absorb an assembly error between the frame-side connection member and the upper-member-side connection member, thereby increasing an assembly efficiency of the structure.

Further, in the front vehicle body structure of the present invention, the connection member has a nut relief section for a nut that fastens the bumper beam extension, and the nut relief section has a reinforcing bent-back flange. The reinforcing bent-back flange can minimize reduction in the strength of the nut relief section.

Furthermore, in the front vehicle body structure of the present invention, the bumper beam extension provided at the front end of the front side frame has such a width as to overlap not only the front end of the front side frame but also front ends of the connection member and the upper member in the front-rear direction. With this arrangement, the present invention can increase the load dispersion efficiency of frontal and oblique collision loads from the bumper beam.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a plan view showing a first embodiment of a front vehicle body structure of the present invention;
Fig. 2 is a bottom view of the front vehicle body structure shown in Fig. 1;
Fig. 3 is a view taken in a direction of arrow 3 in Fig. 1;
Fig. 4 is a left rear perspective view of the front vehicle body structure shown in Fig. 1;
Fig. 5 is a right rear perspective view of the front vehicle body structure shown in Fig. 1;
Fig. 6 is a front view of the front vehicle body structure shown in Fig. 1;
Fig. 7 is a perspective view of bumper beam extensions provided in the front vehicle body structure shown in Fig. 1;
Fig. 8 is a perspective view showing the bumper beam extensions of the body structure with their cap members removed;
Fig. 9 is a rear perspective view showing the front vehicle body structure of the present invention;
Fig. 10 is a front perspective view of the front vehicle body structure;
Fig. 11 is a plan view of the front vehicle body structure;
Fig. 12 is a front view of the front vehicle body structure with the bumper beam extensions removed;
Fig. 13 is a plan view showing primary parts of the front vehicle body structure shown in Fig. 9;
Fig. 14 is a rear perspective view of the front vehicle body structure;
Fig. 15 is a front view of connection members employed in the vehicle body structure;
Fig. 16 is a plan view of the connection members employed in the front vehicle body;
Fig. 17 is a rear perspective view of the connection members employed in the front vehicle body;
Fig. 18 is a side view of the connection members employed in the front vehicle body;
Fig. 19 is a view explanatory of a first half of an operational sequence for assembling the front vehicle body structure;
Fig. 20 is a view explanatory of a second half of the operational sequence for assembling the front vehicle body structure; and
Fig. 21 is a plan view of a second embodiment of the front vehicle body structure of the present invention.

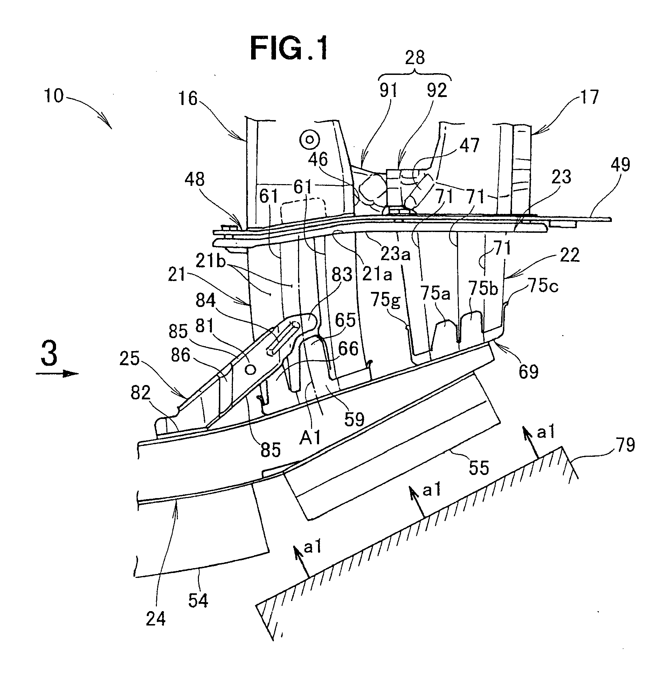

In a front section of a vehicle body 10, as shown in Figs. 1 to 5, there are provided: a front side frame 16 extending in a front-rear direction of the vehicle body; an upper member 17 disposed laterally outwardly of the front side frame 16 in side by side relation to the latter and curved upwardly toward the rear of the vehicle body; a bumper beam extension (hereinafter referred to as "inner bumper beam extension") 21 provided at the front end of the front side frame 16 and arcuately curved inwardly of the vehicle body as viewed in plan; an outer bumper beam extension (or outer bumper beam extension member) 22 disposed laterally outwardly of the inner bumper beam extension 21 and provided at the front end of the upper member 17 and having a central axis extending straight in the front-rear direction of the vehicle body; a connection plate 23 connected between the rear end of the inner bumper beam extension 21 and the front end of the front side frame 16 and interconnecting the inner bumper beam extension 21 and the outer bumper beam extension (outer bumper beam extension member) 22 in the vehicle width direction; a bumper beam 24 provided at the respective front ends of the inner and outer bumper beam extensions 21 and 22; a connection bracket 25 interconnecting the bumper beam 24 and the inner bumper beam extension 21; and a connection member 28 interconnecting a front-end outer side wall 46 of the front side frame 16 and a front-end inner side wall 47 of the upper member 17.

A first embodiment of a front vehicle body structure of the present invention shown in Fig. 1 comprises: the bumper beam 24; the inner and outer bumper beam extensions 21 and 22; the connection plate 23; the front side frame 16; and the upper member 17, details of which will be discussed hereinbelow.

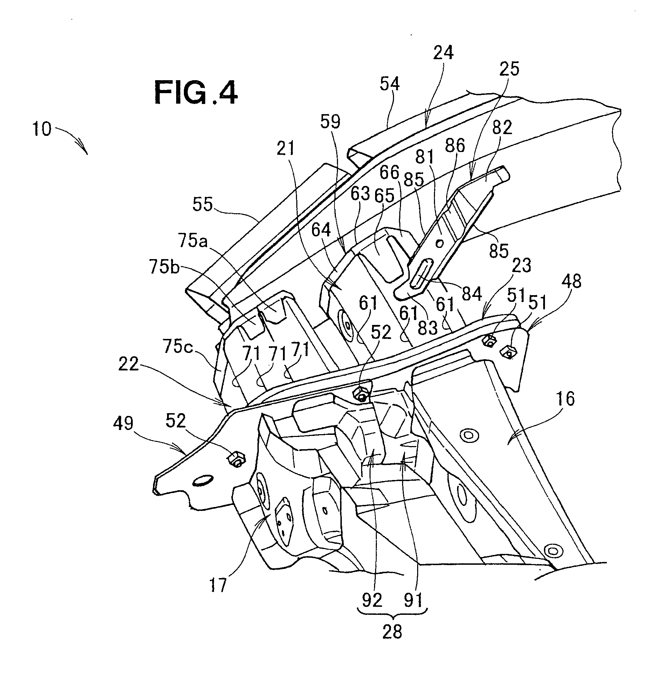

A frame-side mounting plate 48 is provided at the front end of the front side frame 16, and the inner bumper beam extension 21 is fixedly connected to the frame-side mounting plate 48 via the connection plate 23. A plurality of nuts 51 are welded to the frame-side mounting plate 48 so that the connection plate 23 is bolted to the frame-side mounting plate 48, as seen in Fig. 4.

The front side frame 16 is fixedly connected at its rear end to a side sill and tunnel frame (not shown), extending in the front-rear direction of the vehicle body, via a side frame extension (not shown).

The upper member 17 is disposed laterally outwardly of the front side frame 16 in side by side relation thereto and curved upwardly toward the rear of the vehicle body. An upper-member-side mounting plate 49 is provided at the front end of the upper member 17, and the outer bumper beam extension 22 having its central axis extending straight in the front-rear direction of the vehicle body is fixed to the upper-member-side mounting plate 49 via the connection plate 23. A plurality of nuts 52 are welded to the side mounting plate 49 so that the connection plate 23 is bolted to the mounting plate 49, as seen in Fig. 4.

A middle impact absorbing section (safety plate) 54 intended to absorb an impact applied to a pedestrian walking in front of the vehicle is fixed to a front middle portion of the bumper beam 24, and an end impact absorbing section (safety plate) 55 is fixed to a laterally outward end portion of the bumper beam 24.

The bumper beam 24 is fixedly connected at its rear side to the respective front ends of the inner and outer bumper beam extensions 21 and 22, more specifically, to the front surfaces 63 and 73 of cap members 59 and 69 of the inner and outer bumper beam extensions 21 and 22. Further, the bumper beam 24 is fixedly connected at its rear surface portion to the inner bumper beam extension 21 via the connection bracket 25.

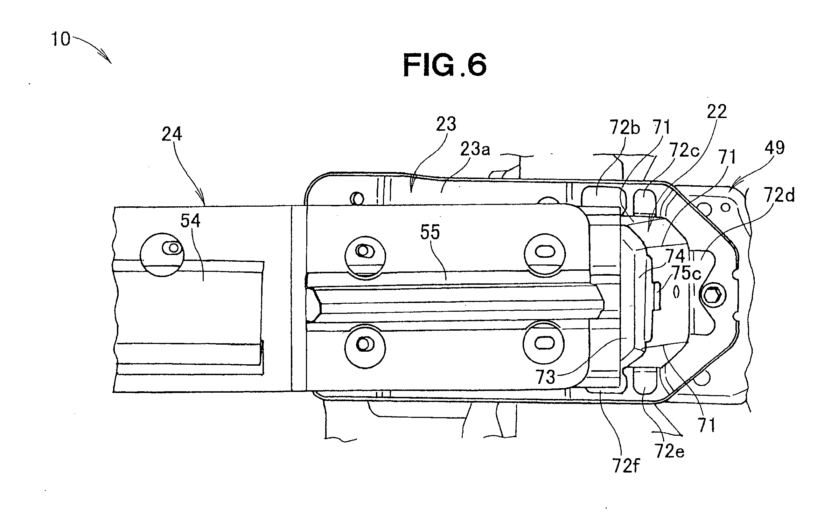

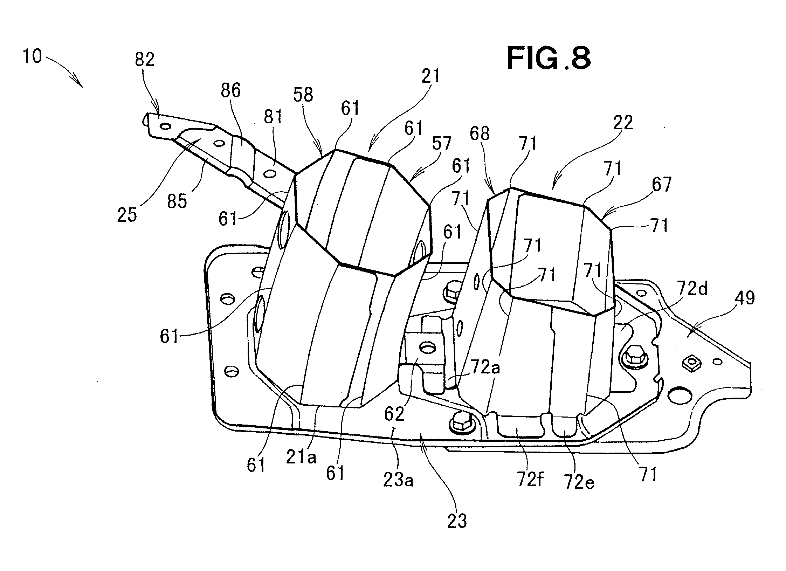

As shown in Figs. 6 to 8, the inner bumper beam extension 21 is generally in the form of a cylinder having a polygonal cross-sectional shape with four corners chamfered. More specifically, the inner bumper beam extension 21 includes an outer piece 57 and inner piece 58 joined together to form a cylinder body having an octagonal cross-sectional shape.

Further, a front end portion of the inner bumper beam extension 21 is shaped to curve laterally outwardly toward the front of the vehicle body, as indicated by a one-dot-dash line A1 in Fig. 1. The inner bumper beam extension 21 is closed at its front end with the cap member 59. The inner bumper beam extension 21 is butt-welded at its rear end to the front surface 23a of the connection plate 23 with the rear ends of ridge lines 61 of the polygonal cross-sectional inner bumper beam extension 21 are fixed to the connection plate 23. Namely, the inner bumper beam extension 21 is constructed as a curved (or banana-shaped) structure with its front end oriented in a laterally outward direction of the vehicle body.

Further, the inner bumper beam extension 21 has an inner flange bent from the polygonal cross-sectional cylinder body toward the connection plate 23 and outer bumper beam extension 22 and fixedly joined to a joining flange (outer flange) 72 of the outer bumper beam extension 22.

The inner bumper beam extension 21 is formed of a steel plate having a 1-mm thickness and thus can be directly MIG welded to the connection plate 23. Namely, a rear end portion 21a of the polygonal cross-sectional cylinder body of the inner bumper beam extension 21 is placed in abutment against the front surface 23a of the connection plate 23, and then an almost entire end surface region of the rear end portion 21a, except for a region where the inner flange 62 is formed, is MIG welded to the connection plate 23. In this way, the rear ends of the ridge lines 61 can be fixed to the front surface 23a of the connection plate 23, so that a load transmission load can be minimized.

The cap member 59 closing the front end of the inner bumper beam extension 21 has a front surface 63 having the bumper beam 24 fixed thereto, and a flange 64 bent rearward from the front surface 63. The rearward flange 64 of the cap member 59 includes flange portions 65 and 66 extending in a direction toward the rear of the vehicle body. The flange portions 65 and 66 are welded at their respective rear ends to the upper surface 21b of the inner bumper beam extension 21, more specifically the polygonal cross-sectional cylinder body of the bumper beam extension 21.

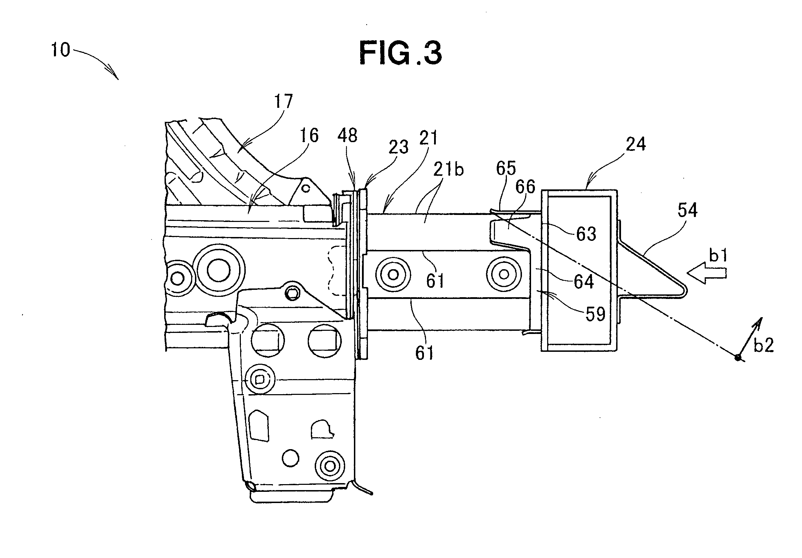

As shown in Fig. 3, as a frontal collision load acts on the bumper beam 24 as indicated by arrow b1, the bumper beam 24 can pivot upward as indicated by arrow b2 and function as a starting point of bellows-like deformation. No flange is provided on the lower surface 21c of the polygonal cross-sectional cylinder body of the bumper beam extension 21. Note that the flange portions 65 and 66 have their respective lengths extending rearward to a position such that the polygonal cross-sectional cylinder body of the bumper beam extension 21 is caused to bend as the bumper beam 24 pivots.

Note that, in a case where the bumper beam 24 is set to pivot downward in response to a frontal collision load applied thereto, flange portions extending toward the rear of the vehicle body may be formed on the lower surface of the rearward flange 64 of the cap member 59 and welded at their respective distal ends to the lower surface 21c of the polygonal cross-section of the inner bumper beam extension 21.

Namely, in the front vehicle body structure, as shown in Fig. 3, the inner bumper beam extension 21 is closed at its front end with the cap member 59, and the rearward flange 64 of the cap member 59 is welded to one of the upper surface 21b and lower surface 21c of the inner bumper beam extension 21. Alternatively, the rearward flange 64 may be welded to the left and/or right side surface of the inner bumper beam extension 21.

As shown in Figs. 6 to 8, the outer bumper beam extension 22 is generally in the form of a cylinder having a polygonal cross-sectional shape chamfered at its four corners. More specifically, the outer bumper beam extension 22 includes an outer piece 67 and inner piece 68 joined together to form a cylinder body of a rectangular cross-sectional shape with four corners chamfered, i.e. octagonal cross-sectional shape.

The outer bumper beam extension 22 is formed of a steel plate having a 1-mm thickness. A plurality of joining flanges 72a to 72f are formed on a rear end portion of the outer bumper beam extension 22 adjacent to the connection plate 23, and these joining flanges 72a to 72f are spot-welded to the connection plate 23. The inner flange 62 of the inner bumper beam extension 21 is fixedly joined to the flange 72a of the plurality of joining flanges 72a to 72f of the outer bumper beam extension 22.

In order to form the plurality of joining flanges 72a to 72f on the outer bumper beam extension 22 adjacent to the connection plate 23, there would occur recesses due to bend reliefs. Because the outer bumper beam extension 22 starts collapsing during collapsing of the inner bumper beam extension 21, the rear ends of individual ridge lines 71 need not be fixed to the front surface of the connection plate 23.

Further, because cost for spot-welding the joining flanges 72a to 72f to the connection plate 23 is much lower than cost for MIG welding the end surface of the outer bumper beam extension 22, the spot-welding can contribute to reduction of manufacturing cost of the front vehicle body structure.

Fixedly joining together the flange 62 of the inner bumper beam extension 21 and the joining flange 72 of the outer bumper beam extension 22 as noted above can contribute to stabilization of a collapsing mode of the inner bumper beam extension 21 and outer bumper beam extension 22.

Further, the outer bumper beam extension 22 is formed in such a manner that its central axis extends straight in the front-rear direction of the vehicle body, and the outer bumper beam extension 22 has a smaller length than the inner bumper beam extension 21 and extends along a shape of a front corner portion of the vehicle body. The outer bumper beam extension 22 is closed at its front end with the cap member 69 and fixed (spot-welded) at the joining flanges 72a to 72f to the connection plate 23.

The cap member 69 has a front surface 73 having the bumper beam 24 fixed thereto, and a cap member flange 74 bent rearward from the front surface 73. The cap member flange 74 has a plurality of flange portions 75a and 75g extending in the direction toward the rear of the vehicle body. Distal ends of the flange portions 75a and 75g are welded to the polygonal cross-sectional cylinder body of the outer bumper beam extension 22.

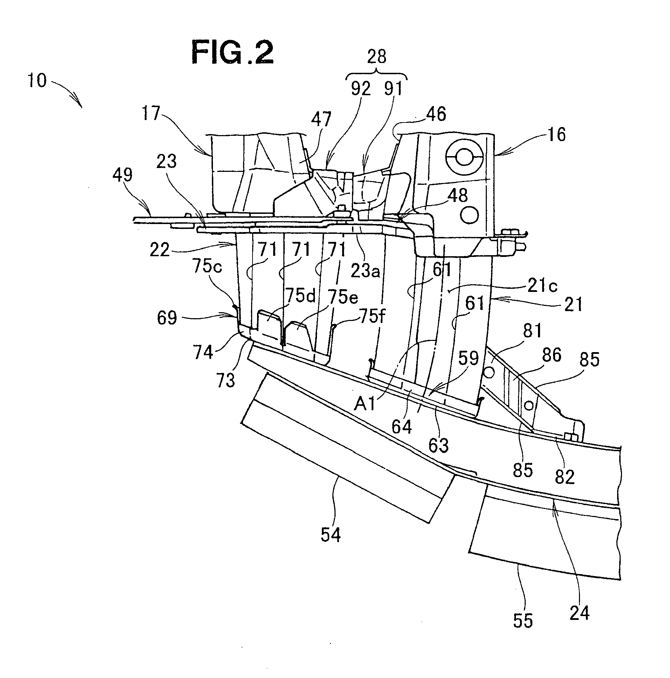

Of the inner and outer bumper beam extensions 21 and 22 in the front vehicle body structure, as shown in Figs. 1 and 2, only the inner bumper beam extension 21, which extends in the front-rear direction and thus tends to collapse in an unstable manner or style at the time of a frontal collision, is curved to stabilize the collapsing style. Thus, at the time of a frontal collision, the outer bumper beam extension 22, having the smaller length than the inner bumper beam extension 21, collapses following an initial collapse of the inner bumper beam extension 21, so that an amount of collision energy absorption, for example, at the time of frontal and oblique frontal collisions can be significantly increased.

Namely, as an external object 79 collides with the vehicle from diagonally forward of the vehicle body, as indicated by a plurality of arrows a1 shown in Fig. 1, the collapsing style or mode can be stabilized because the inner bumper beam extension 21 is shaped to be curved (oriented) in a colliding direction of the external object. As a result, the collision performance of the front vehicle body structure can be controlled in a stable manner.

The connection plate 23 is a single integrally-formed plate that interconnects and fixes thereto the inner and outer bumper beam extensions 21 and 22. The connection plate 23 having the inner and outer bumper beam extensions 21 and 22 fixed thereto is bolted to the frame-side mounting plate 48 of the front side frame 16 and upper-member-side mounting plate 49 of the upper member 17.

The connection bracket 25 includes: a bracket body 81 secured at its opposite end portions to and extending between the bumper beam 24 and the inner bumper beam extension 21; a mounting section 82 bent vertically downward from the front end edge of the bracket body 81 and fixedly mounted to the bumper beam 24; a fastening section 83 formed on a rear end portion of the bracket body 81 adjacent to the inner bumper beam extension 21 and fastened to the inner bumper beam extension 21; a bead 84 formed to extend from the bracket body 81 to the fastening section 83 for preventing deformation of the connection bracket 25, for example, during transportation of the connection bracket 25; reinforcing sections 85 formed on opposite side edges of the bracket body 81 for reinforcing the bracket body 81; and a stress absorbing section 86 extending generally in the front-rear direction with the connection bracket 25 secured at its opposite end portions to the bumper beam 24 and the inner bumper beam extension 21, for intentionally allowing the bracket body 81 to bend or deform when a frontal collision load has acted on the bracket body 81.

The connection bracket 25 is a member for restricting vibration, in the vehicle width direction, of the bumper beam 24, to thereby minimize uncomfortable sound (confined within an engine room) and thus enhance quietness within a passenger compartment. Further, the connection bracket 25 is fixedly joined to rear end regions of the flange portions 65 and 66 of the cap member 59 that does not substantively influence the collision performance of the inner bumper beam extension 21.

The inner bumper beam extension 21 has a polygonal cross-sectional shape and has an arcuately curved shape as viewed in plan such that a front end portion thereof curves arcuately outwardly in the width direction of the vehicle body as it extends forward, and the inner bumper beam extension 21 is butt-welded to the front surface 23a of the connection plate 23 with the rear ends of the ridge lines 61 fixed to the connection plate 23. Thus, the inner bumper beam extension 21 can significantly reduce a transmission loss of a load transmitted from the bumper beam 24 to the front side frame 16 and can start collapsing in a bellows-like fashion at an initial stage of an oblique collision and thereby efficiently absorb collision energy. Further, because the inner bumper beam extension 21 has a 1-mm thickness, it can be subjected to ordinary MIG welding, which can achieve an improved productivity of the front vehicle body structure.

Further, the upper member 17 is disposed laterally outwardly of the front side frame 16 in side by side relation to the latter 16 and curved upwardly toward the rear of the vehicle body. The outer bumper beam extension 22, having its central axis extending straight in the front-rear direction of the vehicle body, is provided at the front end of the upper member 17, and the outer bumper beam extension 22 has a smaller length than the inner bumper beam extension 21 provided at the front end of the front side frame 16.

Further, in the front vehicle body structure, as set forth above and as shown in Figs. 1 and 2, the curved shape of the inner bumper beam extension 21, provided at the front end of the front side frame 16, can settle the collapsing mode and thereby permits stable control of the collision performance. Namely, in the instant embodiment of the front vehicle body structure, only the inner bumper beam extension 21, elongated in the front-rear direction and thus tending to collapse in an unstable manner at the time of an oblique collision of the vehicle, is constructed as a curved (or banana-shaped) structure to stabilize its collapsing mode, so that the shorter, straight outer bumper beam extension 22 is caused to collapse following initial collapse of the inner bumper beam extension 21. In this way, the instant embodiment can increase an amount of collision energy absorption at the time of an oblique collision of the vehicle.

Furthermore, because the outer bumper beam extension 22 supports the bumper beam 24 at the time of a frontal collision of the vehicle with an external colliding object with no substantial inclined angle relative to the bumper beam, the inner bumper beam extension 21 can be prevented from undesirably bending due to the collision.

As set forth above in relation to Fig. 3, the inner bumper beam extension 21 in the front vehicle body structure is closed at its front end with the cap member 59, and the rearward flange 64 of the cap member 59 is welded to one of the upper surface 21b and lower surface 21c of the inner bumper beam extension 21.

The welded side of the inner bumper beam extension 21 is difficult to collapse because it has a greater strength and rigidity than the non-welded side. Thus, as the bumper beam 24 pivots upward or downward due to a frontal collision, the non-welded side of the inner bumper beam extension 21 is bent first, creating a starting point of a collapsing action. As a consequence, the inner bumper beam extension 21 can be collapsed stably in a bellows-like fashion.

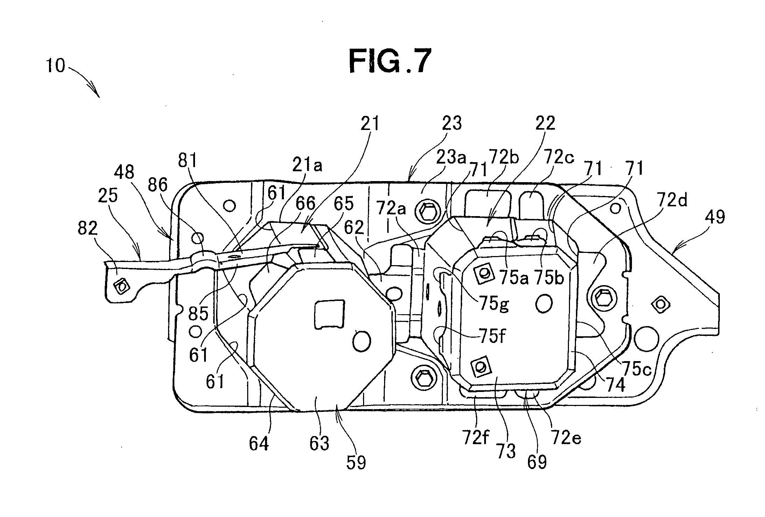

Furthermore, in the front vehicle body structure, as set forth above in relation to Fig. 7, the inner bumper beam extension 21 and the outer bumper beam extension 22 are integrally connected together via the connection plate 23, the collapsing mode can be stabilized even more reliably.

Furthermore, in the instant embodiment of the front vehicle body structure, as shown in Fig. 4, the rearward flange 64 of the cap member 59, closing the front end of the inner bumper beam extension 21 is connected at its rear portion to the bumper beam 24 via the connection bracket 25, so that vibration of the bumper beam 24 can be reduced. In this way, the instant embodiment can minimize adverse influences on the collapsing mode.

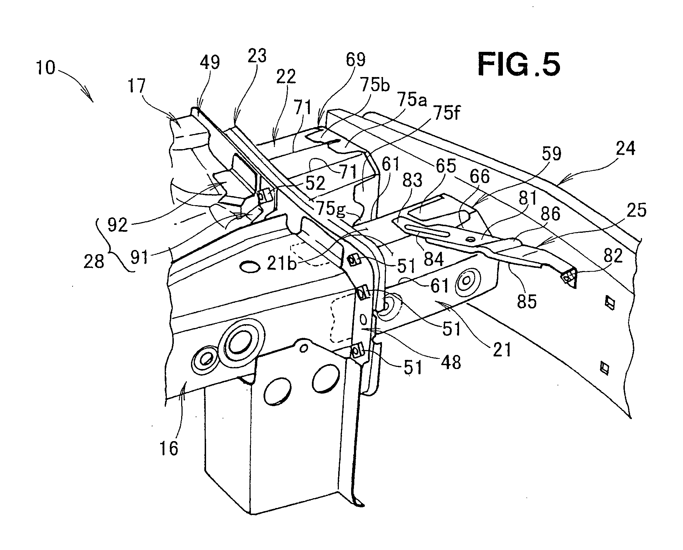

Furthermore, with the bead 84 formed on the connection bracket 25 near the fastening section 83 fastened to the inner bumper beam extension 21 as shown in Figs. 1 and 5, the instant embodiment can prevent deformation of the connection bracket 25, i.e. during transportation of the connection bracket 25.

Furthermore, as shown in Figs. 1 and 5, the connection member 28, which has a generally U sectional shape as viewed sideways or in a side elevation of the front vehicle body structure is constructed of two separate connection members: the frame-side connection member 91 connected to the front end side wall 46 of the front side frame 16; and the upper-member-side connection member 92 connected to the front end side wall 47 of the upper member 17. Thus, the front side frame 16 and the upper member 17 can be fixedly joined with each other via the connection member 28 with an increased efficiency. Thus, at the time of a frontal collision of the vehicle, a collision load can be appropriately dispersed to the front side frame 16 and upper member 17. As a result, the instant embodiment can achieve improved collision performance and rigidity performance while achieving a reduced weight of the front vehicle body structure.

As set forth above, the inner bumper beam extension 21 is formed of a steel plate of a 1-mm thickness, and an almost entire end surface region of the end portion 21a of the polygonal cross-sectional cylinder body of the inner bumper beam extension 21 is MIG welded to the connection plate 23. Further, the outer bumper beam extension 22 is formed of a steel plate of a thickness equal to or less than one mm and has the joining flanges 72a to 72f spot-welded to the connection plate 23. As a modification, an entire end surface of the outer bumper beam extension 22, formed of a steel plate of a 1-mm thickness, may be MIG welded to the connection plate 23.

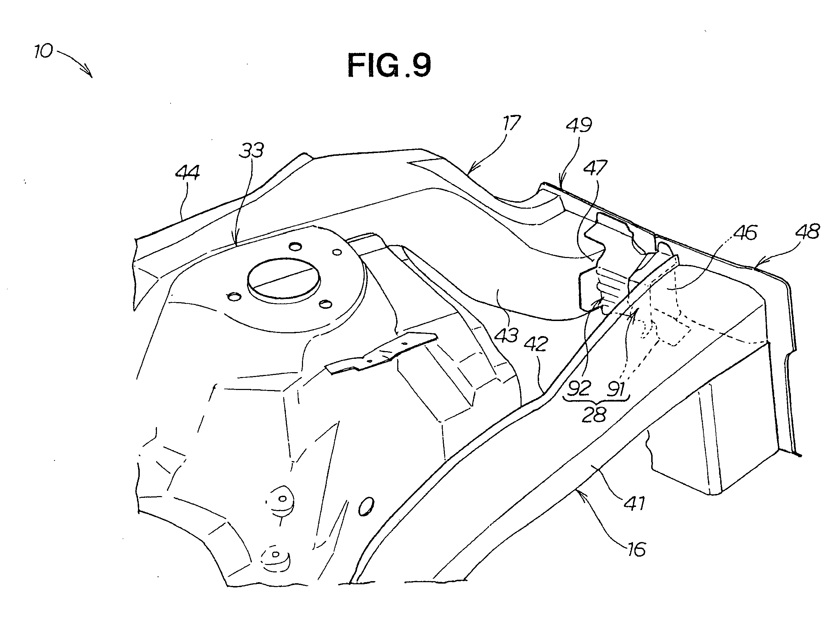

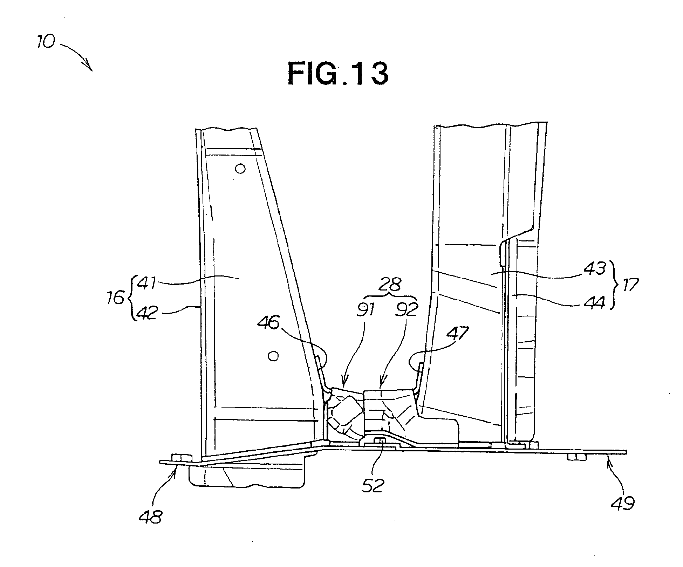

Now, further details of the front vehicle body structure of the present invention will be discussed with reference to Figs. 9 to 21.

As shown in Figs. 9 to 11, the front side frame 16 extends in the front-rear direction of the vehicle body, the upper member 17 is disposed laterally outwardly of the front side frame 16 in side by side relation to the latter 16 and curved upwardly toward the rear of the vehicle body, and the inner bumper beam extension 21 is provided at the front end of the front side frame 16 and arcuately curved in the laterally inward direction of the vehicle body. The outer bumper beam extension 22 is disposed laterally outwardly of the inner bumper beam extension 21 and extends straight in the front-rear direction. The connection plate 23 interconnects the inner bumper beam extension 21 and the outer bumper beam extension 22 in the vehicle width direction, the bumper beam 24 is provided at the front ends of the inner and outer bumper beam extensions 21 and 22, the connection bracket 25 interconnects the bumper beam 24 and the inner bumper beam extension 21, and the connection member 28 interconnects the front-end outer side wall 46 of the front side frame 16 and the front-end inner side wall 47 of the upper member 17. A damper house 33 is provided between the front side frame 16 and the upper member 17.

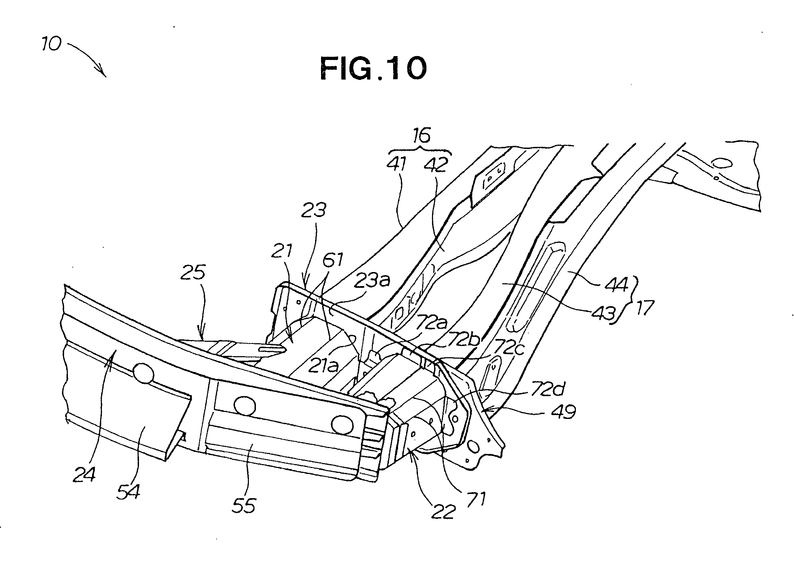

As shown in Figs. 10 to 12, the frame-side mounting plate 48 is provided at the front end of the front side frame 16, and the inner bumper beam extension 21 is fixedly connected to the frame-side mounting plate 48 via the connection plate 23. The plurality of nuts 51 are welded to the frame-side mounting plate 48 so that the connection plate 23 is bolted to the frame-side mounting plate 48. The frame-side mounting plate 48 has an opening 48a facing the interior of the front side frame 16, and protruding portions 48b are formed on the inner peripheral edge, defining the opening 48a, of the frame-side mounting plate 48. The protruding portions 48b are spot-welded to a body 41 of the front side frame 16.

The front side frame 16 is a closed-sectional structure that includes a frame body 41 formed of a steel plate and having a U cross-sectional shape and a frame cover 42 covering the opening side of the frame body 41. The upper-member-side mounting plate 49 is provided at the front end of the upper member 17, and the outer bumper beam extension 22, having its central axis extending straight in the front-rear direction of the vehicle body, is fixed to the upper-member-side mounting plate 49 via the connection plate 23. The plurality of nuts 52 are welded to the mounting plate 49 so that the connection plate 23 is bolted to the mounting plate 49. The upper-member-side mounting plate 49 has an opening 49a facing the interior of the upper member 17, and a protruding portion 49a is formed on the inner peripheral edge, defining the opening 49a, of the upper-member-side mounting plate 49. The protruding portion 49b is spot-welded to a body 43 of the upper member 17.

The upper member 17 is a closed-section structure that includes the member body 43 formed of a steel plate and having a U cross-sectional shape and a cover 44 covering the opening side of the member body 43.

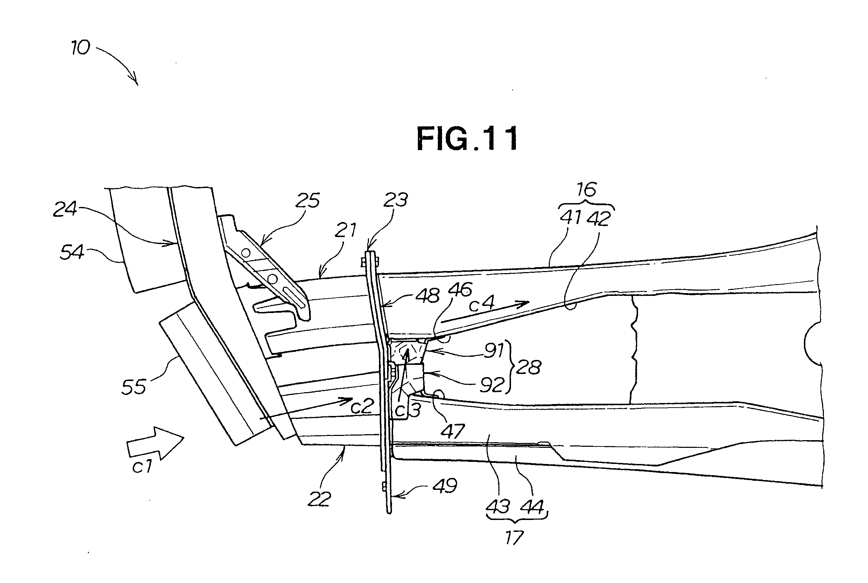

Furthermore, as best seen in Figs. 11 to 14, the connection member 28, which has a generally U sectional shape as viewed in a side elevation of the front vehicle body structure, is constructed of two separate connection members: the frame-side connection member 91 connected to the front end side wall 46 of the front side frame 16; and the upper-member-side connection member 92 connected to the front end side wall 47 of the upper member 17. Thus, the front side frame 16 and the upper member 17 can be fixedly joined with each other via the connection member 28 with an increased efficiency. Thus, at the time of a frontal collision of the vehicle, a collision load can be appropriately dispersed to the front side frame 16 and upper member 17. As a result, it is possible to achieve improved collision performance and rigidity performance while achieving a reduced weight of the front vehicle body structure.

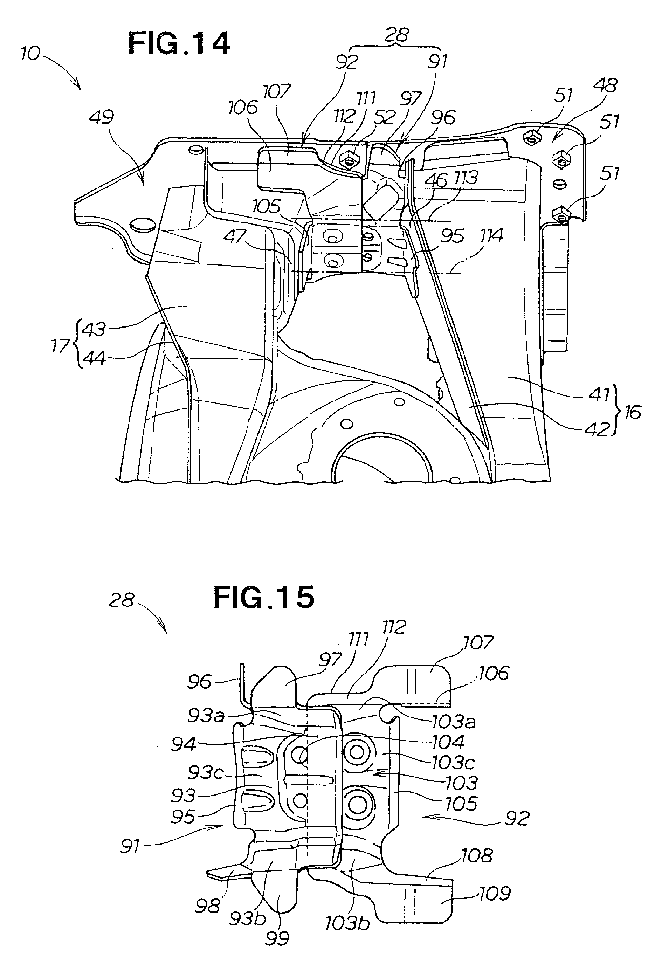

As shown in Figs. 15 to 18, the connection member 91 includes: a body section 93 of a substantially U shape defined by an upper wall 93a, lower wall 93b and vertical wall 93c; a frame-side joint section 94 formed on the body section 93 and fixedly joined to the upper-member-side connection member 92; a side surface flange 95 formed by being bent from a front-frame-side edge portion of the body section 93 and spot-welded to the frame cover 42 of the front side frame 16; an upper surface side flange 96 formed by being bent from an upper-surface side edge portion of the body section 93 and spot-welded to the frame cover 42 of the front side frame 16; an upper front flange 97 formed by being bent from an upper-surface upper end edge portion of the body section 93 and spot-welded to the frame cover 42 of the front side frame 16; a lower surface side flange 98 formed by being bent from a lower-surface side edge portion of the body section 93 and spot-welded to the frame cover 42 of the front side frame 16; and a lower front flange 99 formed by being bent from a lower-surface lower end edge portion of the body section 93 and spot-welded to the frame-side mounting plate 48 of the front side frame 16.

The upper-member-side connection member 92 includes: a body section 103 of a substantially U shape defined by an upper wall 103a, lower wall 103b and vertical wall 103c; an upper-member-side joint section 104 formed on the body section 103 and fixedly joined to the frame-side connection member 91; a side surface flange 105 formed by being bent from an upper-member-side edge portion of the body section 103 and spot-welded to the body 43 of the upper member 17; an upper surface side flange 106 formed by being bent from an upper-surface side edge portion of the body section 103 and spot-welded to the body 43 of the upper member 17; an upper front flange 107 formed by being bent from the upper surface side flange 106 and spot-welded to the body 43 of the upper member 17; a lower surface side flange 108 formed by being extended from a lower-surface side edge portion of the body section 103 and spot-welded to the body 43 of the upper member 17; a lower front flange 109 formed by being bent from the lower surface side flange 108 and spot-welded to the upper-member-side mounting plate 49; a nut relief section 111 (Fig. 14) provided for avoiding or relieving one of the nuts 52 fastening the connection plate 23 to the frame-side mounting plate 48 and upper-member-side mounting plate 49; and a bent-back flange 112 (Fig. 14) for reinforcing a region around the nut relief section 111.

As shown in Fig. 14, the strength of the nut relief section 111 is reinforced by the bent-back flange 112. Note that a plurality of such nut relief sections 111 and bent-back flanges 112 are formed along peripheral edge portions of the body section 103 of a substantially U cross-sectional shape, side surface flange 105 and upper front flange 107 of the upper-member-side connection member 92.

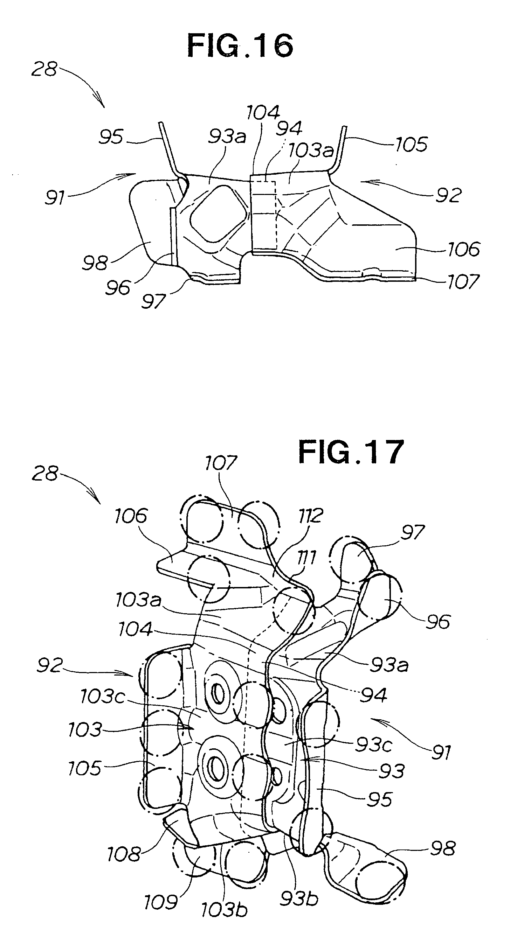

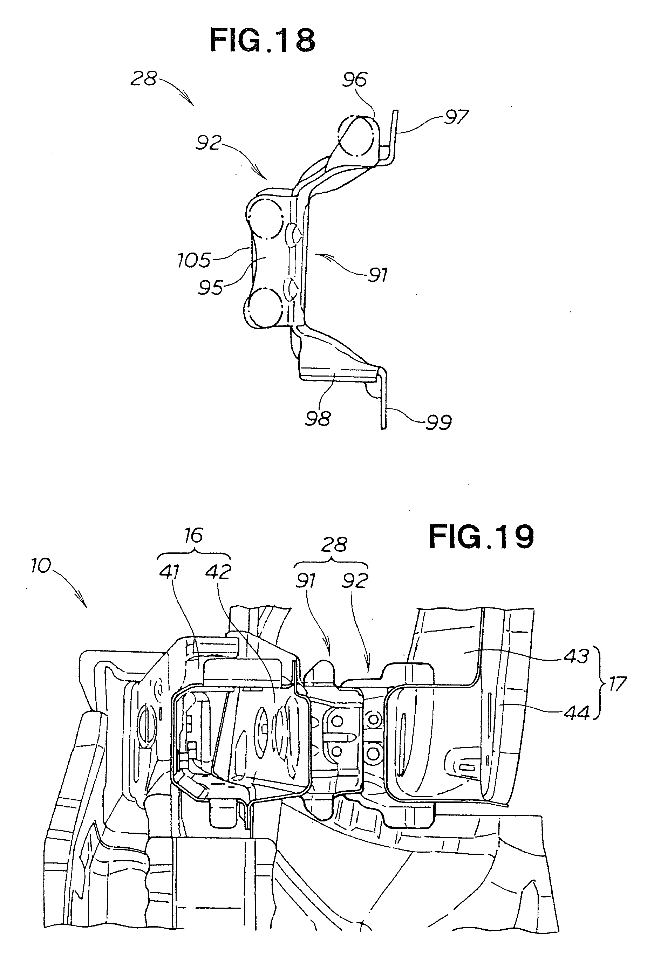

In Figs. 17 and 18, circles of one-dot-dash lines indicate spot welded portions. Namely, the frame-side joint section 94 of the connection member 91 and the upper-member-side joint section 104 of the upper-member-side connection member 92 are spot-welded together at one position (spot) between their respective upper walls 93a and 103a, at one position between their respective lower walls 93b and 103b, and at one position between their respective vertical walls 93c and 103c. The frame-side connection member 91 and the upper-member-side connection member 92 are joined with each other at their respective central portions.

The side surface flange 95 of the frame-side connection member 91 is spot-welded at two positions thereof, and the upper surface side flange 96, upper front flange 97, lower surface side flange 98 and lower front flange 99 of the frame-side connection member 91 are each spot-welded at one position thereof.

The side surface flange 105 of the upper-member-side connection member 92 is spot-welded at three positions thereof, the upper front flange 107 and lower front flange 109 of the upper-member-side connection member 92 are each spot-welded at two positions thereof, and the upper surface side flange 106 and lower surface side flange 108 (for which illustration of the circle of one-dot-dash line is omitted) of the upper-member-side connection member 92 are each spot-welded at one position thereof.

The body section 93 of the frame-side connection member 91 and the body section 103 of the upper-member-side connection member 92, which are each of a substantially U shape, are spot-welded with each other and can be disposed between the front side frame 16 and the upper member 17. Namely, the front side frame 16 and the upper member 17 are firmly supported by ridge lines 113 and 114 (Fig. 14) of the body section 93 and body section 103 of the frame-side connection member 91 and upper-member-side connection member 92.

Further, the side surface flange 95, upper surface side flange 96 and lower surface side flange 98 of the frame-side connection member 91 are joined to the frame cover (cover member) 42 of the front side frame 16 while the side surface flange 105, upper surface side flange 106 and lower surface side flange 108 of the upper member 17 are joined to the upper member body 43, so that the front side frame 16 and the upper member 17 can be securely fixed together.

If, in the connection member 28, the frame-side connection member 91 to be connected to the front side frame 16 and the upper-member-side connection member 92 to be connected to the upper member 17 are not separate members, the side surface flange 95 of the frame-side connection member 91 cannot be spot-welded to the frame cover (cover member) 42 of the front side frame 16 and the side surface flange 105 of the upper-member-side connection member 92 cannot be spot-welded to the body of the upper member 17, because a space between the front side frame 16 and the upper member 17 is so small. This is why the connection member 28 is constructed of the two separate members 91 and 92 as noted above.

Next, a description will be given an example operational sequence for assembling together the front side frame 16, upper member 17, frame-side connection member 91 and upper-member-side connection member 92, with reference to Figs. 15, 16 and 19.

First, the side surface flange 95, upper surface side flange 96 and lower surface side flange 98 of the frame-side connection member 91 are welded to the front side frame 16, and the side surface flange 105, upper surface side flange 106 and lower surface side flange 108 of the upper-member-side connection member 92 are welded to the upper member 17. Then, the front side frame 16 having the frame-side connection member 91 assembled thereto in the aforementioned manner and the upper member 17 having the upper-member-side connection member 92 assembled thereto in the aforementioned manner are assembled together.

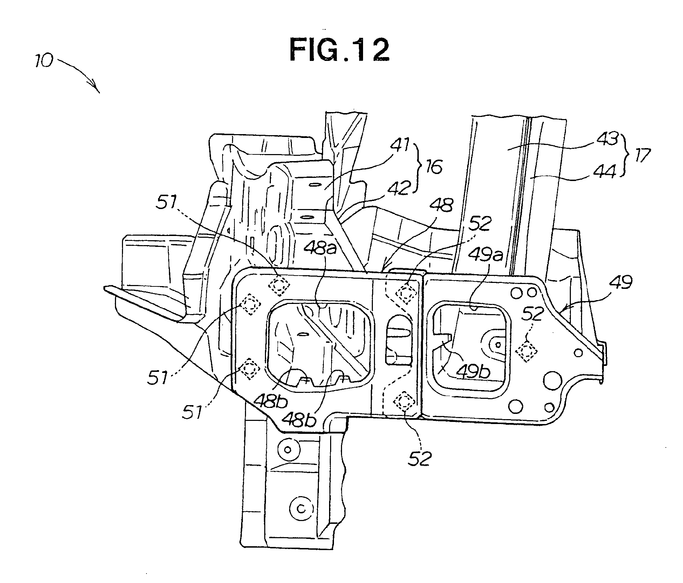

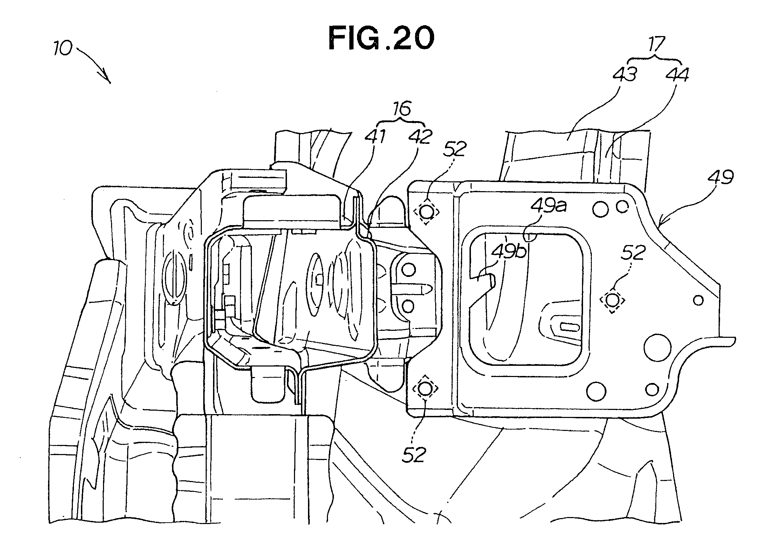

After the front side frame 16 and the upper member 17 are assembled together, the upper-member-side mounting plate 49 is spot-welded to the upper member 17, as shown in Figs. 12 and 20. More specifically, a spot welding gun is inserted in the opening 49 provided in the upper-member-side mounting plate 49 to spot-weld the protruding portion 49b, provided on the edge of the opening 49a, to the inner surface of the front-end inner side wall 47.

Similarly, the frame-side mounting plate 48 is spot-welded to the front side frame 16. More specifically, a spot welding gun is inserted in the opening 48a provided in the frame-side mounting plate 48 to spot-weld the plurality of protruding portions 48b, provided on the edge of the opening 48a, to the frame cover 42 or frame body 41.

After that, the frame-side joint section 94 and the upper-member-side joint section 104 are spot-welded together, then the upper front flange 97 and lower front flange 99 of the frame-side connection member 91 are spot welded to the frame-side mounting plate 48, and then the upper front flange 107 and lower front flange 109 of the upper-member-side connection member 92 are spot welded to the upper-member-side mounting plate 49.

In the front vehicle body structure, as set forth above and as shown in Fig. 11, the connection member 28 is constructed of the two separate connection members, i.e. the frame-side connection member 91 connected to the front side frame 16 and the upper-member-side connection member 92 connected to the upper member 17. Thus, when an oblique collision has occurred as indicated by arrow c1, the collision load is transmitted to the outer bumper beam extension 22 as indicated by arrow c2, so that it can be further transmitted to the connection member 28 as indicated by arrow c3. As a consequence, the collision load can be transmitted to the front side frame 16, having a greater strength than the upper member 17, as indicated by arrow c4.

Further, because the front-end outer side wall 46 of the front side frame 16 and the front-end inner side wall 47 of the upper member 17 are interconnected by the connection member 28, the embodiment can increase the efficiency and strength of the joint between the front ends of the upper member 17 and connection member 28. As a result, the embodiment allows frontal and oblique collision loads from the bumper beam 24 to be appropriately dispersed to the front side frame 16 and upper member 17.

Further, because the connection member 28 is constructed of two separate connection members, i.e. the frame-side connection member 91 to be connected to the front side frame 16 and the upper-member-side connection member 92 to be connected to the upper member 17, it is possible to join the frame-side connection member 91 to the front side frame 16 and the upper-member-side connection member 92 to the upper member 17 in advance, then position the front side frame 16 and upper member 17 in place and then join together the frame-side connection member 91 and the upper-member-side connection member 92. In this way, the connection member 28 can be disposed in a small space where the front side frame 16 and the upper member 17 are provided.

Further, because the connection member 28 is formed in a substantially U sectional shape as viewed in a side elevation as best seen in Figs. 14 and 18, the efficiency and strength of the joint between the front ends of the upper member 17 and connection member 28 can be further increased by the upper and lower edge lines 113 and 114 of the U sectional shape of the connection member 28. As a result, a collision load can be dispersed with an increased efficiency.

Further, because the frame-side connection member 91 and the upper-member-side connection member 92 are joined with each other at their respective central portions as shown in Fig. 14, it is possible to absorb an assembly error between the frame-side connection member 91 and the upper-member-side connection member 92, which can increase an assembly efficiency of the structure.

Further, because the connection member 28 has the nut relief sections 112 for avoiding or relieving the nuts 52 that fasten the inner bumper beam extension 21 and also the nut relief sections 112 each have the reinforcing bent-back flange 112 as set forth above and as shown in Fig. 14, the embodiment can minimize reduction in the strength of the nut relief sections 112.

Whereas the embodiment has been described above in relation to the case where the frame-side connection member 91 and the upper-member-side connection member 92 are spot-welded at one position between their respective upper walls 93a and 103a, at two positions between their respective vertical walls 93c and 103c and at one position between their respective lower walls 93b and 103b, the number of such spot-welded positions may be increased or decreased from the aforementioned; the same can be said for other spot-welded positions.

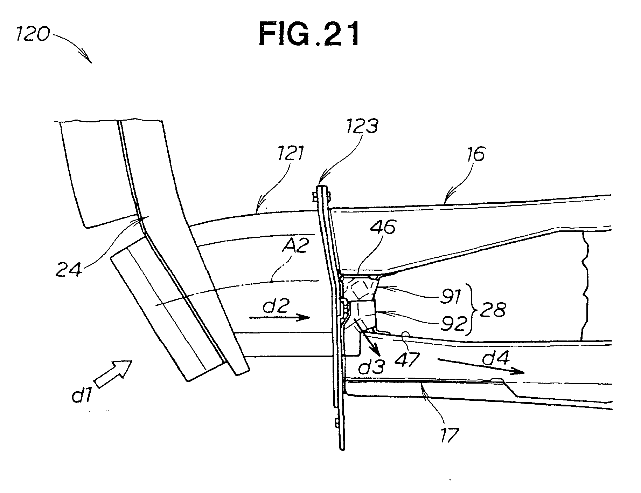

Fig. 21 shows a second embodiment of the front vehicle body structure of the present invention, where elements similar in construction and function to those in the first embodiment are indicated by the same reference numerals as used for the first embodiment and will not be described in detail here. In the second embodiment of the front vehicle body structure, a single bumper beam extension 121, having an increased width in the vehicle width direction, is employed in place of the two separate bumper beam extensions, i.e. the inner bumper beam extension 21 and outer bumper beam extension (outer bumper beam extension member) 22. In other words, the bumper beam extension 121 can be said to be a modification of the bumper beam extension 21 having an increased width and capable of functioning also as the outer bumper beam extension (outer bumper beam extension member) 22.

An inner portion, located inwardly of a centerline (one-dot-dash line) A2, of the bumper beam extension 121 arcuately curves laterally inward, while an outer portion, located outwardly of the centerline A2, of the bumper beam extension 121 extends straight in the front-rear direction of the vehicle body. The bumper beam extension 121 is disposed in front of and supported by a support plate 123. The bumper beam 24 is provided at the front end of the bumper beam extension 121, and the connection member 28 interconnects the front-end outer side wall 46 of the front side frame 16 and the front-end inner side wall 47 of the upper member 17. The connection member 28 is constructed of two separate connection members, i.e. the frame-side connection member 91 connected to the front side frame 16 and the upper-member-side connection member 92 connected to the upper member 17.

Further, in the second embodiment, the bumper beam extension 121 is generally in the form of a cylinder having an octagonal cross-sectional shape. In the vehicle width direction, the bumper beam extension 121 has such an increased width as to overlap not only the front end of the front side frame 16 but also the front ends of the connection member 28 and upper member 17. Namely, the bumper beam extension 121 is provided in such a manner that it overlaps not only the front end of the front side frame 16 but also the front end of the connection member 28 and at least the front-end inner side wall 47 of the upper member 17 in the front-rear direction.

In the second embodiment of the front vehicle body structure, the connection member 28 is constructed of two separate connection members, i.e. the frame-side connection member 91 connected to the front side frame 16 and the upper-member-side connection member 92 connected to the upper member 17, as set forth above in relation to Fig. 21. Thus, when an oblique collision has occurred as indicated by arrow d1, the collision load is not only transmitted through the inwardly-curved inner portion of the bumper beam extension 121 to the front side frame 16, but also transmitted through the straight outer portion of the bumper beam extension 121 to the connection member 28 as indicated by arrow d2 and then transmitted from the connection member 28 to the upper member 17 as indicated by arrow d3 and arrow d4.

Further, the second embodiment of the front vehicle body structure, where the bumper beam extension 121 is provided to overlap the front end of the connection member 28 and front-end inner side wall 47 of the upper member 17 in the front-rear direction as set forth above in relation to Fig. 21, allows frontal and oblique collision loads from the bumper beam 24 to be appropriately dispersed through the bumper beam extension 121 to the front side frame 16 and upper member 17, increasing the load dispersion efficiency.

The front vehicle body structure of the present invention is well suited for application to passenger cars, such as sedans and wagons.

## Claims

1. A front vehicle body structure comprising a front side frame (16) extending in a front-rear direction of a vehicle body, a bumper beam extension (21; 121) provided at a front end of the front side frame, and a bumper beam (24) provided at a front end of the bumper beam extension (21; 121),
wherein the bumper beam extension (21; 121) has a polygonal cross-sectional shape and has a curved shape as viewed in plan such that a front end portion thereof arcuately curves laterally outwardly toward a front of the vehicle body,
wherein the bumper beam extension (21) is closed at a front end thereof with a cap member (59), and the cap member (59) has a rearward flange (64),
**characterized in that** the rearward flange (64) is welded to one of the upper surface (21 b) and lower surface (21 c) of the bumper beam extension (21), the corresponding non-welded side of the bumper beam extension (21) being bent first, thus creating a starting point of a collapsing action.

2. The front vehicle body structure according to claim 1, which further comprises an upper member (17) disposed laterally outwardly of the front side frame in side by side relation thereto and curved upwardly toward the rear of the vehicle body, and an outer bumper beam extension member (22) having a central axis extending straight in the front-rear direction of the vehicle body and provided at a front end of the upper member (17), and wherein the outer bumper beam extension member (22) has a smaller length than the bumper beam extension (21) provided at the front end of the front side frame (16).

3. The front vehicle body structure according to claim 1 or 2, which further comprises a connection plate (23; 123) connected between a rear end of the bumper beam extension (21; 121) and the front end of the front side frame (16), and wherein the bumper beam extension (21) is butt-welded to a front surface (23a) of the connection plate (23) with rear ends of ridge lines (61) of a polygonal cross-sectional body of the bumper beam extension (21) fixed to the front surface of the connection plate.

4. The front vehicle body structure according to any one of claim 2 to 3, wherein the bumper beam extension (21) and the outer bumper beam extension member (22) are interconnected via the connection plate (23).

5. The front vehicle body structure according to claim 1, wherein the rearward flange (64) of the cap member (59) is connected at a rear portion thereof to the bumper beam extension (21) via a connection bracket (25).

6. The front vehicle body structure according to claim 5, wherein the connection bracket (25) has a bead (84) provided thereon, near a fastening section (83) thereof fastened to the bumper beam extension (21), for preventing deformation of the connection bracket (25).

7. The front vehicle body structure according to claim 1, which further comprises an upper member (17) disposed laterally outwardly of the front side frame (16) in side by side relation thereto and curved upwardly toward the rear of the vehicle body, and a connection member (28) interconnecting respective front-end side walls (46, 47) of the front side frame (16) and the upper member (17), and
wherein the connection member (28) is constructed of two separate connection members: a frame-side connection member (91) connected to the front side frame (16); and an upper-member-side connection member (92) connected to the upper member (17).

8. The front vehicle body structure according to claim 7, wherein the connection member (28) has a substantially U sectional shape as viewed in a side elevation.

9. The front vehicle body structure according to claim 7 or 8, wherein the frame-side connection member (91) and the upper member side connection member (92) are joined with each other at respective central portions thereof.

10. The front vehicle body structure according to any one of claims 7 to 9, wherein the connection member (28) has a nut relief section (111) for a nut (52) that fastens the bumper beam extension, and the nut relief section (111) has a reinforcing bent-back flange (112).

11. The front vehicle body structure according to any one of claims 7 to 10, wherein the bumper beam extension (121) provided at the front end of the front side frame (16) has such a width as to overlap not only the front end of the front side frame (16) but also front ends of the connection member (28) and the upper member (17) in the front-rear direction.

## Patentansprüche

1. Vordere Fahrzeugkarosseriestruktur, umfassend einen vorderen Seitenrahmen (16), welcher sich in einer Längsrichtung einer Fahrzeugkarosserie erstreckt, eine Stoßstangenverlängerung (21; 121), welche an einem vorderen Ende des vorderen Seitenrahmens bereitgestellt ist, und eine Stoßstange (24), welche an einem vorderen Ende der Stoßstangenverlängerung (21; 121) bereitgestellt ist,
wobei die Stoßstangenverlängerung (21; 121) eine polygonale Querschnittsform aufweist und eine gekrümmte Form in Draufsicht aufweist, so dass sich ein vorderer Endabschnitt davon bogenförmig seitlich nach außen in Richtung zu einer Fahrzeugkarosseriefront hin krümmt,
wobei die Stoßstangenverlängerung (21) an einem vorderen Ende davon mit einem Deckelelement (59) abgeschlossen ist und das Deckelelement (59) einen rückwärtigen Flansch (64) aufweist,
**dadurch gekennzeichnet, dass** der rückwärtige Flansch (64) an eine von der oberen Fläche (21b) und der unteren Fläche (21c) der Stoßstangenverlängerung (21) geschweißt ist, wobei die entsprechende nicht-geschweißte Seite der Stoßstangenverlängerung (21) zuerst gebogen wird, wodurch ein Startpunkt einer Zusammenfallbewegung erzeugt wird.

2. Vordere Fahrzeugkarosseriestruktur nach Anspruch 1, welche ferner umfasst: ein oberes Element (17), welches seitlich auswärts des vorderen Seitenrahmens in einem Seite-an-Seite-Verhältnis dazu angeordnet und aufwärts in Richtung zum Fahrzeugkarosserieheck gekrümmt ist, und ein äußeres Stoßstangenverlängerungselement (22), welches eine sich geradlinig in der Längsrichtung der Fahrzeugkarosserie erstreckende Zentralachse aufweist und an einem vorderen Ende des oberen Elements (17) bereitgestellt ist, und wobei das äußere Stoßstangenverlängerungselement (22) eine kleinere Länge als die Stoßstangenverlängerung (21) aufweist, welche an dem vorderen Ende des vorderen Seitenrahmens (16) bereitgestellt ist.

3. Vordere Fahrzeugkarosseriestruktur nach Anspruch 1 oder 2, welche ferner eine Verbindungsplatte (23; 123) umfasst, welche zwischen einem hinteren Ende der Stoßstangenverlängerung (21; 121) und dem vorderen Ende des vorderen Seitenrahmens (16) verbunden ist, und wobei die Stoßstangenverlängerung (21) an eine vordere Fläche (23a) der Verbindungsplatte (23) stumpf geschweißt ist, wobei hintere Enden von Kantenlinien (61) eines Körpers mit polygonalem Querschnitt der Stoßstangenverlängerung (21) an der vorderen Fläche der Verbindungsplatte befestigt sind.

4. Vordere Fahrzeugkarosseriestruktur nach einem der Ansprüche 2 bis 3, wobei die Stoßstangenverlängerung (21) und das äußere Stoßstangenverlängerungselement (22) über die Verbindungsplatte (23) miteinander verbunden sind.

5. Vordere Fahrzeugkarosseriestruktur nach Anspruch 1, wobei der rückwärtige Flansch (64) des Deckelelements (59) an einem hinteren Abschnitt davon mit der Stoßstangenverlängerung (21) über einen Verbindungsbügel (25) verbunden ist.

6. Vordere Fahrzeugkarosseriestruktur nach Anspruch 5, wobei der Verbindungsbügel (25) eine daran bereitgestellte Stanzrippe (84) in der Nähe eines Befestigungsabschnitts (83) davon aufweist, welcher an der Stoßstangenverlängerung (21) befestigt ist, um eine Verformung des Verbindungsbügels (25) zu verhindern.

7. Vordere Fahrzeugkarosseriestruktur nach Anspruch 1, welche ferner umfasst: ein oberes Element (17), welches seitlich auswärts des vorderen Seitenrahmens (16) in einem Seite-an-Seite-Verhältnis dazu angeordnet und aufwärts in Richtung zu dem Fahrzeugkarosserieheck hin gekrümmt ist, und ein Verbindungselement (28), welches jeweilige vordere Endseitenwände (46, 47) des vorderen Seitenrahmens (16) und des oberen Elements (17) miteinander verbindet, und
wobei das Verbindungselement (28) aus zwei getrennten Verbindungselementen hergestellt ist: einem mit dem vorderen Seitenrahmen (16) verbundenen rahmenseitigen Verbindungselement (91) und einem mit dem oberen Element (17) verbundenen Verbindungselement (92) auf der Seite des oberen Elements.

8. Vordere Fahrzeugkarosseriestruktur nach Anspruch 7, wobei das Verbindungselement (28) in einer Seitenansicht eine im Wesentlichen U-Schnittform aufweist.

9. Vordere Fahrzeugkarosseriestruktur nach Anspruch 7 oder 8, wobei das rahmenseitige Verbindungselement (91) und das Verbindungselement (92) auf der Seite des oberen Elements an jeweiligen Mittelabschnitten davon miteinander verbunden sind.

10. Vordere Fahrzeugkarosseriestruktur nach einem der Ansprüche 7 bis 9, wobei das Verbindungselement (28) einen Mutteraussparungsabschnitt (111) für eine Mutter (52) aufweist, welche die Stoßstangenverlängerung befestigt, und der Mutteraussparungsabschnitt (111) einen zurückgebogenen Verstärkungsflansch (112) aufweist.

11. Vordere Fahrzeugkarosseriestruktur nach einem der Ansprüche 7 bis 10, wobei die Stoßstangenverlängerung (121), welche an dem vorderen Ende des vorderen Seitenrahmens (16) bereitgestellt ist, eine derartige Breite aufweist, dass sie nicht nur das vordere Ende des vorderen Seitenrahmens (16) überlappt, sondern auch vordere Enden des Verbindungselements (28) und des oberen Elements (17) in der Längsrichtung.

## Revendications

1. Structure de carrosserie avant de véhicule comprenant un châssis latéral avant (16) s'étendant dans une direction avant-arrière d'une carrosserie de véhicule, une extension de poutre de pare-chocs (21 ; 121) prévue au niveau d'une extrémité avant du châssis latéral avant, et une poutre de pare-chocs (24) prévue au niveau d'une extrémité avant de l'extension de poutre de pare-chocs (21 ; 121),
dans laquelle l'extension de poutre de pare-chocs (21 ; 121) a une forme transversale polygonale et a une forme incurvée, comme observé en plan, de sorte que sa partie d'extrémité avant s'incurve de manière arquée latéralement vers l'extérieur, vers une partie avant de la carrosserie de véhicule,
dans laquelle l'extension de poutre de pare-chocs (21) est fermée au niveau de son extrémité avant avec un élément de capuchon (59), et l'élément de capuchon (59) a une bride arrière (64),
**caractérisée en ce que** la bride arrière (64) est soudée à l'une parmi la surface supérieure (21b) et la surface inférieure (21c) de l'extension de poutre de pare-chocs (21), le côté non soudé correspondant de l'extension de poutre de pare-chocs (21) étant tout d'abord plié, créant ainsi un point de départ d'une action d'affaissement.

2. Structure de carrosserie avant de véhicule selon la revendication 1, qui comprend en outre un élément supérieur (17) disposé latéralement vers l'extérieur du châssis latéral avant en relation côte à côte avec ce dernier et incurvé vers le haut vers l'arrière de la carrosserie de véhicule, et un élément d'extension de poutre de pare-chocs externe (22) ayant un axe central s'étendant tout droit dans la direction avant-arrière de la carrosserie de véhicule et prévu au niveau d'une extrémité avant de l'élément supérieur (17), et dans laquelle l'élément d'extension de poutre de pare-chocs externe (22) a une plus petite longueur que l'extension de poutre de pare-chocs (21) prévue au niveau de l'extrémité avant du châssis latéral avant (16).

3. Structure de carrosserie avant de véhicule selon la revendication 1 ou 2, qui comprend en outre une plaque de raccordement (23 ; 123) raccordée entre une extrémité arrière de l'extension de poutre de pare-chocs (21 ; 121) et l'extrémité avant du châssis latéral avant (16), et dans laquelle l'extension de poutre de pare-chocs (21) est soudée bout à bout à une surface avant (23a) de la plaque de raccordement (23) avec les extrémités arrière des lignes de crête (61) d'un corps polygonal en section transversale de l'extension de poutre de pare-chocs (21) fixée à la surface avant de la plaque de raccordement.

4. Structure de carrosserie avant de véhicule selon l'une quelconque des revendications 2 à 3, dans laquelle l'extension de poutre de pare-chocs (21) et l'élément d'extension de poutre de pare-chocs extérieure (22) sont interconnectés via la plaque de raccordement (23).

5. Structure de carrosserie avant de véhicule selon la revendication 1, dans laquelle la bride arrière (64) de l'élément de capuchon (59) est raccordée au niveau de sa partie arrière à l'extension de poutre de pare-chocs (21) via une console de raccordement (25).

6. Structure de carrosserie avant de véhicule selon la revendication 5, dans laquelle la console de raccordement (25) a un bourrelet (84) prévu sur cette dernière, à proximité de sa section de fixation (83) fixée sur l'extension de poutre de pare-chocs (21), pour empêcher la déformation de la console de raccordement (25).

7. Structure de carrosserie avant de véhicule selon la revendication 1, qui comprend en outre un élément supérieur (17) disposé latéralement vers l'extérieur du châssis latéral avant (16) selon sa relation côte à côte et incurvé vers le haut vers l'arrière de la carrosserie de véhicule, et un élément de raccordement (28) raccordant les parois latérales d'extrémité avant (46, 47) respectives du châssis latéral avant (16) et l'élément supérieur (17), et
dans laquelle l'élément de raccordement (28) est construit avec deux éléments de raccordement séparés : un élément de raccordement du côté du châssis (91) raccordé au châssis latéral avant (16) ; et un élément de raccordement du côté de l'élément supérieur (92) raccordé à l'élément supérieur (17).

8. Structure de carrosserie avant de véhicule selon la revendication 7, dans laquelle l'élément de raccordement (28) a une forme transversale sensiblement en U, lorsqu'il est observé sur une vue en élévation latérale.

9. Structure de carrosserie avant de véhicule selon la revendication 7 ou 8, dans laquelle l'élément de raccordement du côté du châssis (91) et l'élément de raccordement du côté de l'élément supérieur (92) sont assemblés entre eux au niveau de leurs parties centrales respectives.

10. Structure de carrosserie avant de véhicule selon l'une quelconque des revendications 7 à 9, dans laquelle l'élément de raccordement (28) a une section d'évidement d'écrou (111) pour un écrou (52) qui fixe l'extension de poutre de pare-chocs, et la section d'évidement d'écrou (111) a une bride de renforcement pliée vers l'arrière (112).

11. Structure de carrosserie avant de véhicule selon l'une quelconque des revendications 7 à 10, dans laquelle l'extension de poutre de pare-chocs (121) prévue au niveau de l'extrémité avant du châssis latéral avant (16) a une largeur telle qu'elle recouvre non seulement l'extrémité avant du châssis latéral avant (16) mais également les extrémités avant de l'élément de raccordement (28) et de l'élément supérieur (17) dans la direction avant-arrière.
